# EUROPEAN PATENT APPLICATION

(11) **EP 4 159 379 A1**
(43) Date of publication of application: **05.04.2023**
(21) Application number: 22198451.1
(22) Date of filing: 28.09.2022
(51) Int. Cl.: B25H 7/04, G01C 1/00, G01C 3/00, G01C 5/00, G01C 15/00

(54) **UNNEVENNESS LEVEL INSPECTING DEVICE, UNEVENNESS LEVEL INSPECTING METHOD, AND PROGRAM**

(30) Priority: 30.09.2021 JP 2021160649
(71) Applicant: TOPCON CORPORATION, Tokyo 174-8580 (JP)
(72) Inventor: KIKUCHI, Takeshi, Tokyo, 174-8580 (JP)
(74) Representative: dompatent von Kreisler Selting Werner - Partnerschaft von Patent- und Rechtsanwälten mbB

(57) **Abstract**

Provided is a technology to generate unevenness level display data that enables intuitive and visual recognition of an unevenness level inspection result. An unevenness level inspecting device 1 includes a target T at a known distance from a to-be-inspected surface, a traveling unit 21 for traveling on the to-be-inspected surface, a communication unit 29 capable of making communication with a surveying instrument 6 configured to measure three-dimensional position coordinates of the target T at predetermined intervals, and a control unit 10 configured to calculate a height of the to-be-inspected surface corresponding to a measurement position of the target T based on the three-dimensional position coordinates of the target T, the control unit 10 calculates a height of the to-be-inspected surface corresponding to a measurement position of the target T measured each time the unevenness level inspecting device 1 travels a predetermined distance based on the three-dimensional position coordinates of the target T, and generates display data for displaying unevenness level information associating a difference between the height of the to-be-inspected surface and a reference height with inspecting device position coordinates in a manner that the unevenness level information is superimposed on a site design drawing.

## Description

### Technical Field

The present disclosure relates to an unevenness level inspecting device and an unevenness level inspecting method, more specifically, to an unevenness level inspecting device, an unevenness level inspecting method, and a program for inspecting the levelness accuracy of an upper surface of a structure.

### Background Art

During a construction work, normally, a foundation work is performed in which a foundation serving as a base structure of a building is constructed. A rising top end of the foundation is required to have a level upper surface. That is, to eliminate level differences of the top end as much as possible. This is because, in actuality, the levelness accuracy of the building depends on the top end accuracy. In this description, a "top end" means a portion that is an uppermost surface of an arbitrary structure regardless of a foundation rising.

Therefore, after placement of concrete at the foundation rising, a self-leveling material called a top end leveler is poured into a formwork about several millimeters to 1 centimeter to level an upper surface of the top end. The top end leveler is mortar adjusted to be lower in viscosity than ready mix concrete, and when the top end leveler is poured into the formwork, it spreads evenly and brings about a level finish.

However, in actuality, it is difficult to obtain perfect levelness. While a low portion needs additional application, a high portion needs to be scraped off. The top end accuracy during work is confirmed by a worker by measurement with a measuring tape, and this operation is complicated.

### Citation List

### Patent Literature

Patent Literature 1: Japanese Published Unexamined Patent Application No. 2021-11772

### Summary of Invention

### Technical Problem

Patent Literature 1 discloses an unevenness level inspecting device which includes a traveling mechanism, a target, and a control unit, and can travel to a desired position while performing tracking by a surveying instrument (total station) having an automatic tracking function, measure an unevenness level of a floor surface from measurement results of the target, and output unevenness level information to an external device.

It is disclosed that, in the unevenness level inspecting device of Patent Literature 1, unevenness level information is, for example, a numerical value of height adjusting amounts of facilities and equipment to be installed on a floor surface. Such information related to the numerical value is necessary and sufficient for a worker at a site. However, for an explanation, etc., to a client without expertise, it has been required to output unevenness level inspection results at the entire site in the form of unevenness level display data that is intuitively and visually recognizable.

The present invention was made in view of these circumstances, and an object thereof is to provide an unevenness level inspecting device and an unevenness level inspecting method by which intuitively and visually recognizable unevenness level display data is output.

### Solution to Problem

In order to achieve the object described above, an unevenness level inspecting device according to an aspect of the present invention includes a target at a known distance from a to-be-inspected surface, a traveling unit for traveling on the to-be-inspected surface, a communication unit capable of making communication with a surveying instrument configured to measure three-dimensional position coordinates of the target at predetermined intervals, and a control unit configured to calculate a height of the to-be-inspected surface corresponding to a measurement position of the target based on the three-dimensional position coordinates of the target, wherein the control unit calculates a height of the to-be-inspected surface corresponding to a measurement position of the target measured each time the unevenness level inspecting device travels a predetermined distance based on the three-dimensional position coordinates of the target, and generates display data for displaying unevenness level information associating a difference between the height of the to-be-inspected surface and a reference height with inspecting device position coordinates in a manner that the unevenness level information is superimposed on a site design drawing.

An unevenness level inspecting method according to another aspect of the present invention is an unevenness level inspecting method using an unevenness level inspecting device including a target at a known distance from a to-be-inspected surface, a traveling unit for traveling on the to-be-inspected surface, a communication unit capable of making communication with a surveying instrument configured to measure three-dimensional position coordinates of the target at predetermined intervals, and a control unit configured to calculate a height of the to-be-inspected surface corresponding to a measurement position of the target based on the three-dimensional position coordinates of the target, wherein the control unit calculates a height of the to-be-inspected surface at a measurement position of the target measured each time the unevenness level inspecting device travels a predetermined distance based on the three-dimensional position coordinates of the target, and generates display data for displaying unevenness level information associating a difference between the height of the to-be-inspected surface and a reference height with inspecting device position coordinates in a manner that the unevenness level information is superimposed on a site design drawing.

A program according to still another embodiment of the present invention causes a computer to perform the unevenness level inspecting method according to the aspect described above.

### Benefits of Invention

According to the unevenness level inspecting device and the unevenness level inspecting method according to the aspects described above, unevenness level inspection results can be output as intuitively and visually recognizable unevenness level display data.

### Brief Description of Drawings

FIG. 1 is a view illustrating an outline of an unevenness level inspecting system according to an embodiment of the present invention.
FIG. 2 is a configuration block diagram of the same inspecting system.
FIG. 3A is a side view of an unevenness level inspecting device constituting the same inspecting system, and FIG. 3B is a bottom view of the same.
FIG. 4 is a process flowchart of basic operations of the inspecting device and a surveying instrument in the same inspecting system.
FIG. 5 is a flowchart describing the entirety of an unevenness level inspecting method using the same inspecting system.
FIG. 6 is a process flowchart related to settings of a reference height for an unevenness level inspection in the same inspecting method.
FIG. 7 is a process flowchart related to an unevenness level inspection in the same inspecting method.
FIG. 8 is a process flowchart related to a hammering test in the same inspecting method.
FIG. 9 is a process flowchart related to display data generation in the same inspecting method.
FIGS. 10A, 10B, 10C, and 10D are views illustrating examples of display data that are generated by the same inspecting device.
FIGS. 11A, 11B, and 11C are views illustrating different examples of display data that are generated by the same inspecting device.
FIG. 12 is a configuration block diagram of an inspecting system according to a second embodiment of the present invention.
FIG. 13A is a side view of an unevenness level inspecting device constituting the same inspecting system, and FIG. 13B is a bottom view of the same.
FIGS. 14A, 14B, and 14C are views illustrating examples of markings printed on a to-be-inspected surface by an unevenness level inspecting method using the same inspecting system.

### Description of Embodiments

Hereinafter, preferred embodiments of the present invention will be described with reference to the drawings, however, the present invention is not limited to these. Components having the same function common to the respective embodiments and modifications are provided with the same name, and the same components are provided with the same reference signs, and overlapping description will be omitted as appropriate.

### (First Embodiment)

### 1. Unevenness Level Inspecting System S

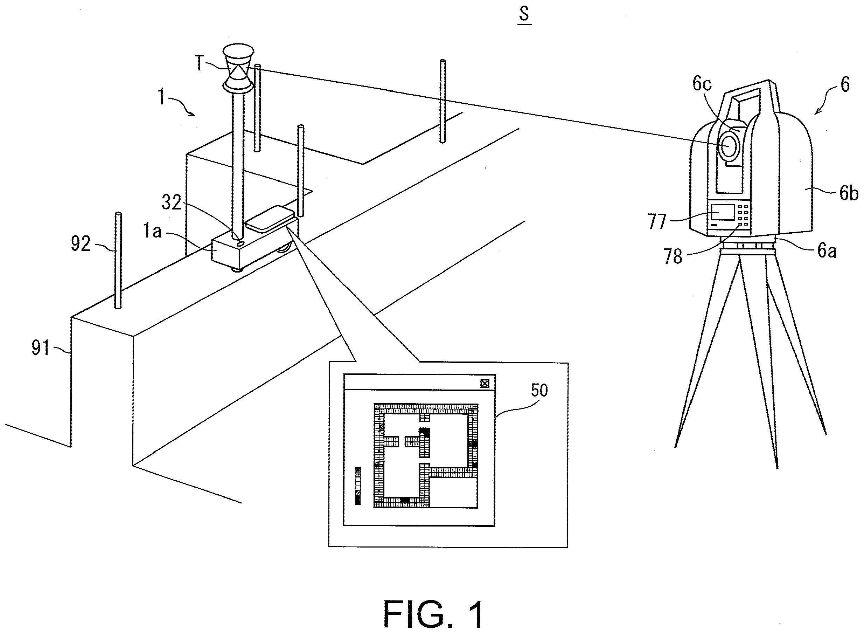

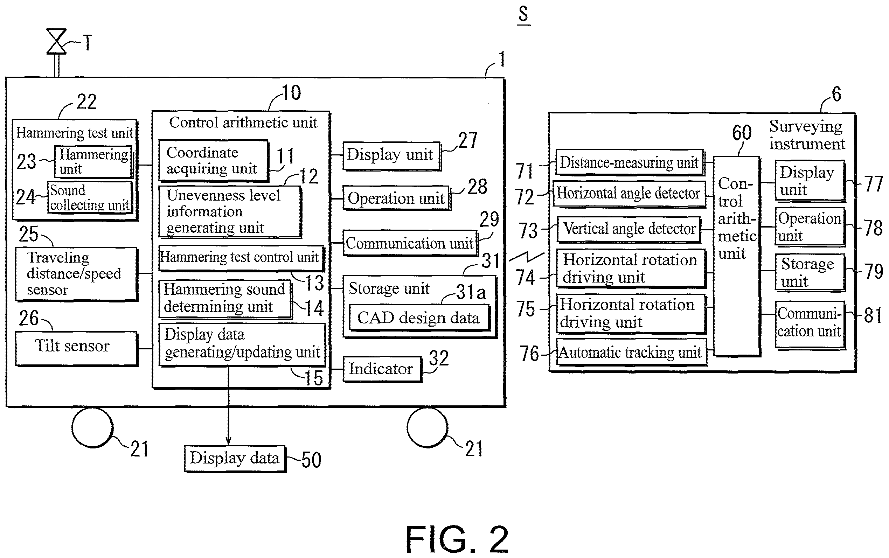

FIG. 1 is an external schematic view of an unevenness level inspecting system (hereinafter, simply referred to as "system") S according to an embodiment of the present invention. The system S includes an unevenness level inspecting device 1 (hereinafter, simply referred to as "inspecting device") and a surveying instrument 6. FIG. 1 illustrates a state where an unevenness level of a top end of a foundation rising 91 is inspected by using the system S. A reference sign 92 denotes an anchor bolt. FIG. 2 is a configuration block diagram of the system S.

The system S is configured to inspect an unevenness level of a to-be-inspected surface by causing the inspecting device 1 that includes a target T and a traveling unit 21 including wheels, etc., to travel on the to-be-inspected surface by a manual operation.

### 2. Inspecting Device 1

The inspecting device 1 has a housing 1a having a rectangular parallelepiped shape, and is configured to be capable of traveling on a traveling route by rotating bodies constituting the traveling unit 21.

On an upper surface of the housing 1a, a pole 1b as a target support member is erected, and the target T is attached to an upper end portion of the pole 1b. The target T is a so-called all-around prism configured by radially combining a plurality of triangular pyramid-shaped prisms, and retro-reflects light incident from the entire circumference (360°).

The inspecting device 1 includes the target T, a control arithmetic unit 10, the traveling unit 21, a hammering test unit 22, a traveling distance/speed sensor 25, a tilt sensor 26, a display unit 27, an operation unit 28, a communication unit 29, a storage unit 31, and an indicator 32.

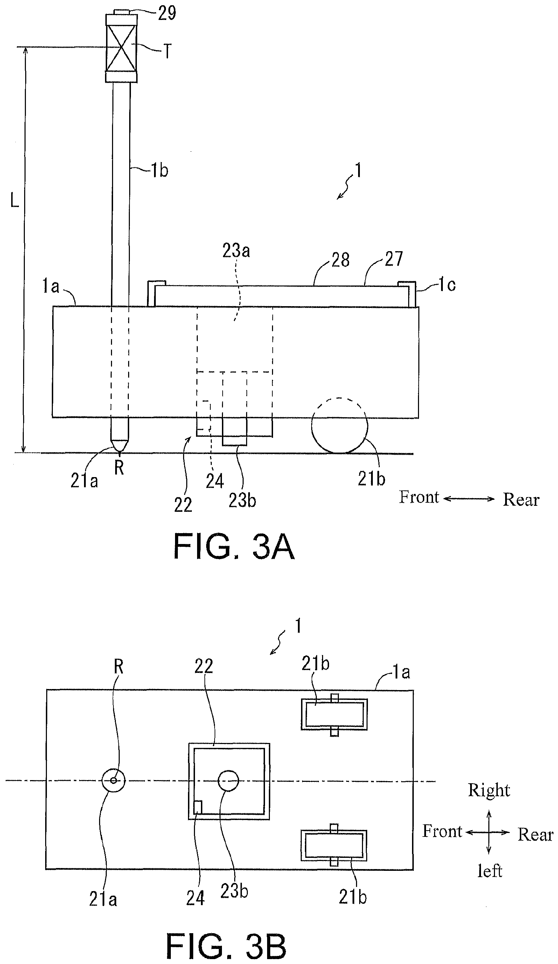

At a lower portion of the housing 1a, the traveling unit 21 is provided. In the example illustrated in FIGS. 3A, 3B, the traveling unit 21 includes one front wheel 21a, and a pair of rear wheels 21b provided left and right to face each other. The front wheel 21a is a ball caster that can move in 360-degree directions by a bearing. The rear wheels 21b are wheels (rollers), and are respectively independently rotatable around rotation shafts provided orthogonal to a traveling direction when traveling straight forward.

The housing 1a is adjusted so that its upper surface is level when the inspecting device 1 is placed on a level surface. The pole 1b is provided orthogonal to the upper surface of the housing 1a. The target T is attached just above the front wheel 21a. A worker pushes the housing 1a or the pole 1b of the inspecting device 1 by hand to cause the inspecting device 1 to travel forward and backward on a to-be-inspected surface by a manual operation so that the front wheel 21a continued to the pole 1b is always in contact with the to-be-inspected surface at a grounding point R.

The hammering test unit 22 includes a hammering unit 23 including a solenoid coil 23a and a columnar hammer 23b, and a sound collecting unit 24. The hammering unit 23 hammers the to-be-inspected surface by moving the hammer 23b up and down repeatedly in a predetermined period according to ON/OFF of current application to the solenoid coil 23a. The sound collecting unit 24 is a so-called microphone, and collects hammering sounds issued by the hammer 23b and outputs them to the control arithmetic unit 10. The hammering test unit 22 is aligned with the pole 1b in the front-rear direction so as to prevent a size in a width direction of the inspecting device 1 from increasing.

Position relationships of the target T with the grounding point R of the front wheel 21a just below the target T and a hammering test position of the hammering test unit 22 (hammering point by the hammer 23b) are known.

The traveling distance/speed sensor 25 includes a rotary encoder provided on, for example, the rear wheel 21b of the traveling unit 21, and detects a traveling distance of the inspecting device 1 from the number of rotations of the rear wheel 21b. In addition, the traveling distance/speed sensor 25 detects a speed from an angular velocity of rotation of the rear wheel 21b. Alternatively, the traveling distance/speed sensor 25 may be capable of detecting a traveling distance and speed by measuring its own position by using a GNSS device that can detect its own position based on a navigation signal of a navigation satellite. Alternatively, the traveling distance/speed sensor 25 may be capable of detecting a traveling distance and speed of the inspecting device based on position coordinates of the inspecting device obtained by a coordinate acquiring unit 11 described later.

The tilt sensor 26 is, for example, an electronic tilt sensor, and is provided in relation to two axes of an X-axis direction (left-right direction of the device main body) and a Y-axis direction (front-rear direction of the device main body) inside the housing 1a or near the target T. The tilt sensor 26 detects a tilt of the target T at a timing synchronized with a timing of a measurement of the target T by the surveying instrument 6, and outputs a detection result to the control arithmetic unit 10.

The display unit 27 is, for example, a liquid crystal display. The operation unit 28 is, for example, a keyboard, a mouse, etc., and enables a worker to perform various inputs, selections, instructions, and determinations, etc. In the illustrated example, the display unit 27 and the operation unit 28 are integrally configured as a touch panel display, and the display is attached as a detachable display to a holder 1c at an upper portion of the housing 1a. Without limitation to this, these units may be integrally configured on an outer surface of the housing 1a.

The communication unit 29 enables wireless transmission and reception of information between the inspecting device 1 and the surveying instrument 6. As a communication means, Wi-Fi, Bluetooth (registered trademark), infrared communication, the Internet, a mobile phone network, etc., can be used.

The storage unit 31 is a nonvolatile storage as an auxiliary storage device. The storage unit 31 is, for example, an HDD (Hard Disc Drive) or SSD (Solid State Drive) . The storage unit 31 may be partially configured by an external storage device such as a USB flash memory. The storage unit 31 stores at least programs for executing functions of the respective functional units of the control arithmetic unit 10 when the respective functional units are implemented software-wise.

In addition, in the storage unit 31, CAD (Computer Aided Design) design data 31a is stored. The CAD design data 31a is a design drawing of a work site, a construction object, a structure, etc., created by a computer such as a personal computer. The CAD design data 31a is created by using an absolute coordinate system such as a map coordinate system.

The indicator 32 indicates that a worker is causing the inspecting device 1 to travel in an appropriate speed range based on detection results of the traveling distance/speed sensor 25. The indicator 32 includes, for example, an LED light source and a cover, and emits green light when the speed of the inspecting device 1 is within an appropriate range. A worker causes the inspecting device 1 to travel while confirming light emission of the indicator 32.

The control arithmetic unit 10 is a control arithmetic unit that includes at least a CPU (Central Processing Unit) and a RAM (Random Access Memory) . The control arithmetic unit reads out various programs stored in the storage unit to the memory and executes them. The control arithmetic unit 10 includes, as functional units, the coordinate acquiring unit 11, an unevenness level information generating unit 12, a hammering test control unit 13, a hammering sound determining unit 14, and a display data generating/updating unit 15.

As a basic operation of the inspecting device 1, the coordinate acquiring unit 11 acquires three-dimensional position coordinates of the target T (hereinafter, referred to as "target position coordinates") acquired by the surveying instrument 6 at predetermined intervals, and calculates three-dimensional position coordinates of the inspecting device 1 (hereinafter, referred to as "inspecting device position coordinates"). The acquired coordinates are stored in the storage unit 31. Inspecting device position coordinates can be obtained from the acquired target position coordinates, a detection value of the tilt sensor 26, and a distance L (known) from the target T to the grounding point R.

The unevenness level information generating unit 12 sets a reference height as a reference of unevenness level determination, and calculates a height component (z component) of inspecting device position coordinates acquired by the coordinate acquiring unit 11 from the inspecting device position coordinates, as a height of the to-be-inspected surface at a device position (unevenness level inspection position) corresponding to the measurement position of the target T. As a reference height, an arbitrary value can be input in advance by a worker. It is preferable that the foundation rising height at the site is measured at a plurality of points with a measuring tape, etc., before the start of the inspection. For example, a representative value such as an average value, a median value, or a mode value of the measurement results is set as a reference height. When the reference height is not set in advance, a height of a to-be-inspected surface at a starting point may be set as a reference height. The unevenness level information generating unit 12 generates unevenness level information associating a difference between the calculated to-be-inspected surface height and the reference height with inspecting device position coordinates, and outputs the unevenness level information to the display data generating/updating unit 15.

The hammering test control unit 13 conducts a hammering test by controlling the hammering unit 23 and the sound collecting unit 24.

The hammering sound determining unit 14 determines whether the to-be-inspected surface has an abnormality from a hammering sound difference, and when an abnormality is found, generates hammering sound determination results associating information on the presence of the abnormality with hammering position coordinates, and outputs the hammering sound determination results to the display data generating/updating unit 15. Here, an abnormality means a crack, peeling, and floating, etc., of a to-be-inspected surface. A determination as to whether there is an abnormality is made based on differences in waveform and frequency between abnormal hammering sounds and normal hammering sounds.

The hammering sound determining unit 14 may determine whether a to-be-inspected surface is normal or abnormal by using a learned model for determining normal/abnormal hammering sounds, the model obtained by performing machine learning by using learning data obtained by labeling normal and abnormal hammering sounds of various to-be-inspected surfaces. Alternatively, at the site, normal hammering sounds are registered before the start of the inspection, and when a hammering sound deviating from the normal hammering sounds is detected, a determination as to whether the to-be-inspected surface is normal/abnormal is made.

The display data generating/updating unit 15 reads out CAD design data 31a from the storage unit 31, and generates display data 50 for displaying unevenness level information input from the unevenness level information generating unit in a manner that the unevenness level information is superimposed on a drawing of the CAD design data 31a. In addition, the display data generating/updating unit adds hammering sound determination results input from the hammering sound determining unit 14 to the display data so that the hammering sound determination results are superimposed and displayed on the unevenness level information. In addition, the display data generating/updating unit 15 updates the display data 50 to reflect new unevenness level information and hammering sound determination results each time the unevenness level information and the hammering sound determination results are input.

The functions of these functional units may be implemented hardware-wise in circuits and programmable logic devices, etc., or may be implemented software-wise by programs. When the functions are implemented by programs, these programs may be stored in a computer-readable storage medium such as a CD (Compact Disc), a DVD (Digital Versatile Disc), a Blu-ray (registered trademark) disc, and distributed.

### 3. Surveying Instrument 6

The surveying instrument 6 is a motor-driven total station having an automatic tracking function. The surveying instrument 6 includes, in appearance, a base portion 6a provided on a leveling device, a bracket portion 6b that rotates horizontally on the base portion 6a, a telescope 6c that rotates vertically at the center of the bracket portion 6b, and a display unit 77 and an operation unit 78 provided on a front surface of the bracket portion 6b.

The surveying instrument 6 includes a control arithmetic unit 60, a distance-measuring unit 71, a horizontal angle detector 72, a vertical angle detector 73, a horizontal rotation driving unit 74, a vertical rotation driving unit 75, an automatic tracking unit 76, the display unit 77, the operation unit 78, a storage unit 79, and a communication unit 81.

The distance-measuring unit 71 outputs distance-measuring light such as an infrared laser toward the target T, and receives reflected light to measure a distance to the target T.

The horizontal angle detector 72 detects a rotation angle of the bracket portion 6b in the horizontal direction, and the vertical angle detector 73 detects a rotation angle of the telescope 6c in the vertical direction. Accordingly, an angle of an optical axis of the distance-measuring light, that is, an angle of the target T is measured. The horizontal rotation driving unit 74 and the vertical rotation driving unit 75 are motors that are controlled by the control arithmetic unit 60 and respectively drive a horizontal rotation shaft and a vertical rotation shaft.

The automatic tracking unit 76 emits, as tracking light, an infrared laser, etc., of a wavelength different from that of the distance-measuring light and receives reflected light by an image sensor such as a CCD sensor or CMOS sensor, and acquires a landscape image including the tracking light and a landscape image excluding the tracking light. The control arithmetic unit 60 detects a position of the target T from a difference between these images, and performs automatic tracking so that the telescope 6c always faces the target T.

The display unit 77 and the operation unit 78 are user interfaces of the surveying instrument 6. Via these units, command and setting of a surveying operation, and confirmation of an operation status and measurement results, etc. can be performed.

The storage unit 79 consists of, for example, a memory card, an HDD, etc. The storage unit 79 stores various programs for realizing various functions including a distance-measuring program of the surveying instrument 6. In addition, the storage unit 79 stores various information acquired by the control arithmetic unit 60.

The communication unit 81 enables wireless communication with the inspecting device 1 by using the same communication method. Target position coordinates calculated under the control of the control arithmetic unit 60 are transmitted to a controller 4 at predetermined intervals.

The control arithmetic unit 60 is a control arithmetic unit configured by mounting at least a CPU and a memory on an integrated circuit, and controls the rotation driving units 74 and 75 and controls the distance-measuring unit 71 and the automatic tracking unit 76. The control arithmetic unit 60 calculates target position coordinates from distance and angle measurement results of the target T. The control arithmetic unit 60 automatically tracks the target T, and according to an instruction from the inspecting device 1, makes distance and angle measurements of the target T and transmits target position coordinates to the inspecting device at all times.

The surveying instrument 6 is not limited to a total station, and a surveying device such as a scanner device having an automatic tracking function and a target scanning function can be applied as long as it can perform automatic tracking and acquire three-dimensional position coordinates of the target T.

### 4. Inspecting Method

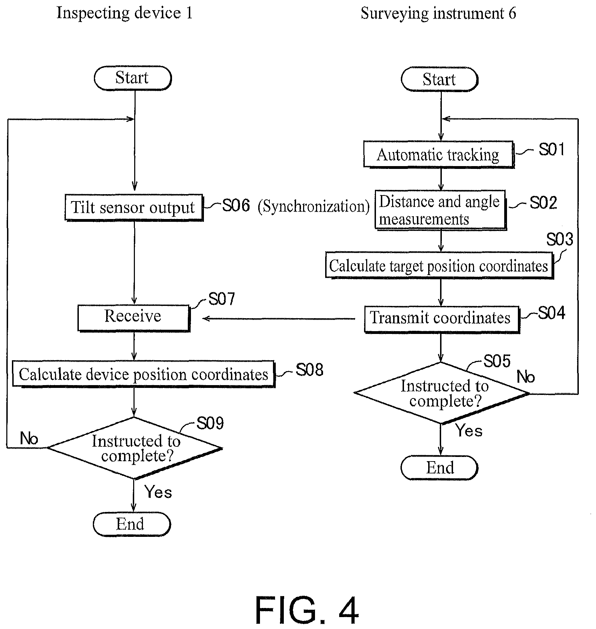

Next, an inspecting method using the system S will be described. First, basic operation of the system S will be described. As basic operation, the system S executes processing illustrated in FIG. 4 during an inspection.

While performing automatic tracking in Step S01, the surveying instrument 6 makes distance and angle measurements of the target T in Step S02. Next, in Step S03, the surveying instrument 6 calculates target position coordinates, and in Step S04, transmits the target position coordinates to the inspecting device 1. In Step S05, until a worker instructs the completion through the inspecting device 1, Steps S01 to S05 are repeated.

When the inspecting device 1 starts an inspection according to a worker's instruction, in Step S06, the tilt sensor 26 outputs a detection value to the control arithmetic unit 10 at a timing synchronized with the distance and angle measurements of the target T made by the surveying instrument 6. In Step S07, the inspecting device 1 receives target position coordinates from the surveying instrument 6, and in Step S08, the inspecting device 1 calculates inspecting device position coordinates. In Step S09, until the worker instructs the completion, Steps S06 to S09 are repeated at all times.

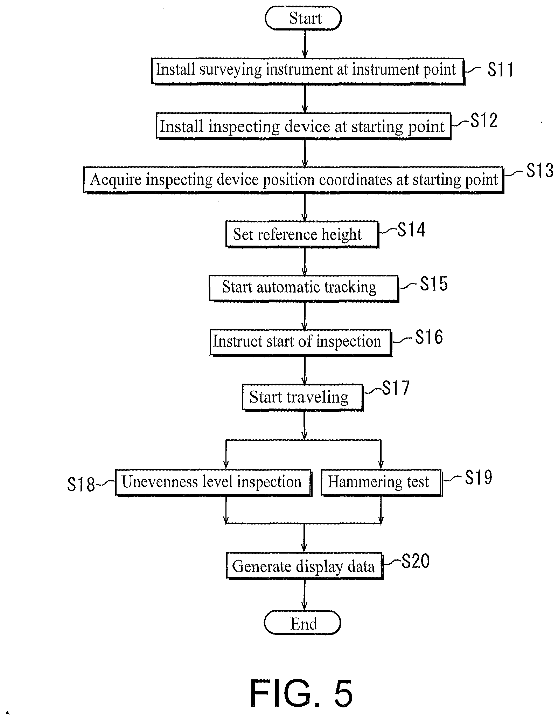

FIG. 5 is a flowchart describing an outline of the work procedures of this entire inspecting method. When starting an inspection, in Step S11, a worker installs the surveying instrument 6 at an instrument point. The instrument point is a known point, or is known by measuring known points after installation of the surveying instrument 6. A direction angle of the surveying instrument 6 is known by measuring a plurality of known points. Three-dimensional position coordinates acquired in the surveying instrument 6 are converted into coordinates in the same absolute coordinate system as the CAD design data 31a.

Next, in Step S12, the worker installs the inspecting device 1 at a starting point. Next, in Step S13, according to a worker's instruction, the surveying instrument 6 measures target position coordinates of the inspecting device 1 installed at the starting point, and accordingly, as in the basic operation, acquires inspecting device position coordinates. Next, in Step S14, as described later, the inspecting device 1 sets a reference height.

Next, in Step S15, according to a worker's instruction, automatic tracking by the surveying instrument 6 is started. Next, in Step S16, when the inspecting device 1 and the surveying instrument 6 are instructed by the worker to start an inspection, the inspecting device 1 and the surveying instrument 6 start basic operations.

In Step S17, the worker starts traveling of the inspecting device 1 by pushing the inspecting device 1 by hand. When traveling is started, in Step S18, the inspecting device 1 conducts an unevenness level inspection, and at the same time, conducts a hammering test in Step S19. In the unevenness level inspection and the hammering test, unevenness level information and hammering sound determination results are output at the respective predetermined intervals.

In Step S20, the inspecting device 1 generates display data from unevenness level information and the hammering sound determination results. The processes in Steps S18 and S19 are performed in parallel during traveling, and the process in Step S20 is performed in coordination with the processes in Steps S18 and S19. The generated display data 50 may be displayed on the display unit 27, or may be stored in the storage unit 31. Alternatively, the display data 50 may be output to an external device through the communication unit 29. After that, the inspection is completed.

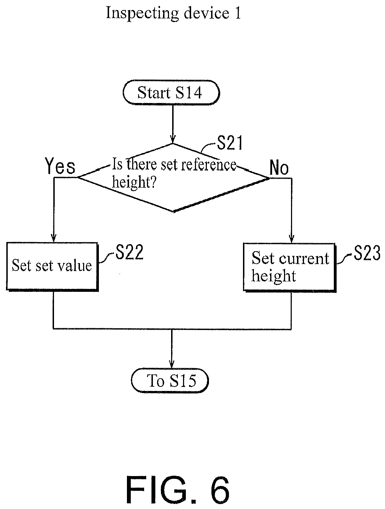

Detailed processes in S14 and S18 to S20 will be respectively described with reference to FIGS. 6 to 9.

As illustrated in FIG. 6, when Step S14 starts, in Step S21, the unevenness level information generating unit 12 determines whether there is a reference height set in advance. In the case of Yes, the unevenness level information generating unit 12 sets the value as a reference height. In the case of No, a height of the to-be-inspected surface at the starting point is calculated from the inspecting device position coordinates acquired in Step S13, and this height is set as a reference height, and the processing shifts to Step S15.

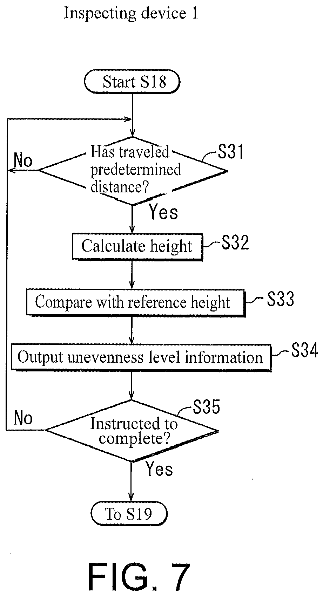

As illustrated in FIG. 7, when Step S18 starts, in Step S31, the unevenness level information generating unit 12 determines whether the inspecting device 1 has traveled a predetermined distance (for example, 3 cm) based on output values of the traveling distance/speed sensor 25. When the inspecting device 1 has traveled the predetermined distance (Yes), in Step S32, the unevenness level information generating unit 12 calculates a height of the to-be-inspected surface.

Next, in Step S33, the unevenness level information generating unit 12 compares the calculated to-be-inspected surface height and the reference height. Next, in Step S34, unevenness level information associating a magnitude of a difference between the to-be-inspected surface height and the reference height with the inspecting device position coordinates is output to the display data generating/updating unit 15. In Step S35, until an instruction to complete the inspection is given, Steps S31 to S35 are repeated.

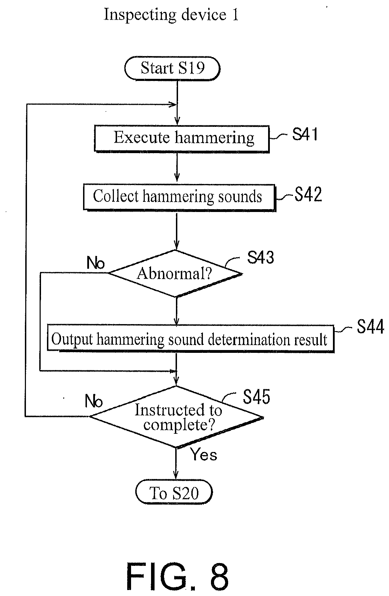

As illustrated in FIG. 8, when Step S19 starts, in Step S41, the hammering test control unit 13 starts hammering with the hammer 23b by controlling the hammering unit 23, and starts hammering sound collection by controlling the sound collecting unit 24 in Step S42. The collected hammering sounds are associated with hammering position coordinates and successively output to the hammering sound determining unit 14.

In Step S43, the hammering sound determining unit 14 determines whether there is a hammering sound abnormality. When an abnormality is found (Yes), in Step S44, the hammering sound determining unit 14 generates hammering sound determination results associating information on the presence of the abnormality with hammering position coordinates, and outputs the hammering sound determination results to the display data generating/updating unit 15. In Step S45, until a command to complete the test is given, Steps S41 to S45 are repeated.

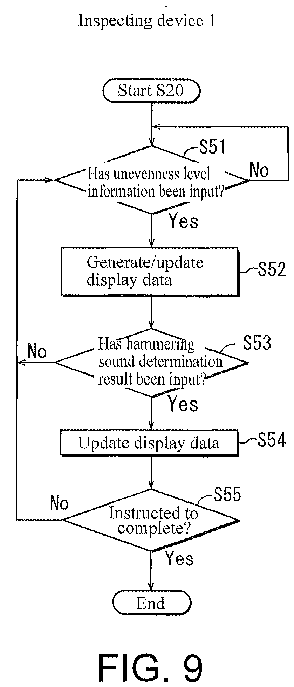

As illustrated in FIG. 9, when Step S20 starts, and in Step S51, the unevenness level information output in Step S34 is input into the display data generating/updating unit 15 (in the case of Yes), in Step S52, the display data generating/updating unit 15 reads the CAD design data 31a from the storage unit 31 and generates display data.

Next, in Step S53, when the hammering sound determination results output in Step S44 are input (in the case of Yes), in Step S54, the display data generating/updating unit 15 updates display data so that the hammering sound determination results are superimposed and displayed on the display data generated in Step S52. In Step S55, Steps S51 to S55 are repeated until the worker instructs the completion of the inspection.

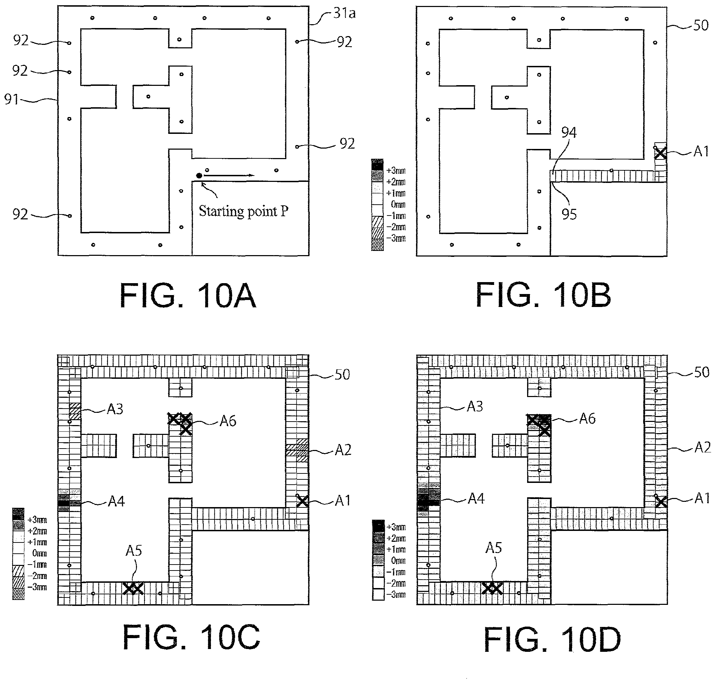

Here, display data will be described. FIGS. 10B to 10D illustrate examples of display data when the present inspecting method is performed by causing the inspecting device 1 to travel in an arrow direction from a starting point P at the site indicated by the CAD design data 31a illustrated in FIG. 10A. The reference sign 91 denotes a foundation rising. The reference sign 92 denotes an anchor bolt provided at a top end of the foundation rising. In the display data 50, rectangular indications 95 centered at respective device positions (unevenness inspection position) 94 corresponding to respective target T measurement positions are assigned. For example, with respect to a foundation rising with a width of 12 cm, a size of each rectangular indication 95 corresponds to a size having a length of 3 cm in a traveling direction × a width of 6 cm at the site in a case where a height of the to-be-inspected surface is calculated each time the inspecting device travels 3 cm. That is, a rectangular region with a width half the width of the to-be-inspected surface represents a measurement value of the device position.

Each time unevenness level information is input, the display data generating/updating unit 15 superimposes and displays a rectangular indication 95 filled with a color that differs depending on a magnitude of a difference between a height of the to-be-inspected surface at the unevenness inspection position 94 and the reference height, on the CAD design data 31a. The colors to fill the rectangular indications 95 are not particularly limited. However, for example, as illustrated in FIGS. 10B and 10C, bi-polar color progression is preferably used. In this case, a difference from the reference height, falling within a predetermined range (± 1 mm, etc.) based on 0 mm as a reference, is filled with white or no color, and the filling color becomes darker as an absolute value of the difference increases toward the more positive and negative sides. Alternatively, single hue color progression is preferably used as illustrated in FIG. 10D. In this case, the filling color becomes darker as the difference from the reference height increases (from a negative value to a positive value) . Both color progressions enable intuitive recognition of the unevenness level. In this example, a difference from the reference height is represented by a positive value when the height of the to-be-inspected surface is higher than the reference height, and represented by a negative value when the height of the to-be-inspected surface is lower than the reference height.

In FIGS. 10B and 10C, a reference height is set to a representative value such as an average value, a median value or a mode value of heights of the to-be-inspected surface measured at a plurality of points on the to-be-inspected surface, and bi-polar color progression indication is used so that a difference of 0 mm from the reference height is displayed in white or no color, and the color becomes darker as an absolute value of the difference increases toward the more positive and negative sides. Accordingly, only a portion that is not level, such as a depressed portion or a protruding portion, can be emphasized by being colored. As a result, an unevenness level can be more intuitively recognized.

On the other hand, in FIG. 10D, a reference height is set to a height of the to-be-inspected surface at the starting point P, and single hue color progression indication is used so that the filling color becomes darker according to a magnitude of the difference from the reference height. In this case, it is not necessary to measure a height of the to-be-inspected surface in advance, and even when it is unknown what level the reference height is in the entire to-be-inspected surface, the unevenness level can be intuitively recognized. In the case of FIG. 10D, it is also possible that after the inspection of the entire to-be-inspected surface is completed, a to-be-inspected surface height at a portion without unevenness is re-calculated and set as a new reference height, and the indication can be converted into bi-polar color progression indication according to a magnitude of a difference between the new reference height and a to-be-inspected surface height.

Each time hammering sound determination results are generated and input, the display data generating/updating unit 15 updates the display data 50 so that an indication of the hammering sound determination results is superimposed and displayed on the CAD design data 31a (superimposed on the rectangular indications 95 indicating unevenness level information). In the illustrated example, a cross mark is displayed.

FIG. 10B illustrates display data 50 when the inspecting device 1 is caused to travel from a starting point in FIG. 10A to a region A1. As described above, each time unevenness level information and hammering sound determination results are input into the display data generating/updating unit 15, the display data 50 is updated. Therefore, by displaying the display data 50 on the display unit 27 and updating the display in real time, a worker can grasp the progress status of the inspection. As a result, overlapping and omission of inspection can be prevented.

FIGS. 10C and 10D illustrate display data 50 when the inspection of the entire site is completed. From the display data 50, it is found that, at points A1 and A5, the to-be-inspected surface is level although it has an abnormality such as a crack. It is also found that, at points A2 and A3, the surface has a depression although it has no abnormality such as a crack. It is also found that, at point A4, although the surface has no abnormality, it protrudes, and at point A6, the to-be-inspected surface protrudes and has a surface abnormality. In this way, according to the present embodiment, an unevenness level and a hammering inspection result of a to-be-inspected surface can be intuitively and visually recognized, so that even common people without expertise can easily recognize the accuracy of a top end and an abnormality of its upper surface.

The top end leveler may crack or peel off by shrinking when dried due to its properties. Even when the top end leveler cracks or peels off, no problem occurs as long as the level surface is maintained. On the other hand, there are certain cases that cracking, etc., causes unevenness. Common people without expertise may have an unfavorable impression due to the extremely deteriorated finish by cracks. Therefore, a problem may occur between an owner of a construction object and a worker. In the present embodiment, the presence of cracking, peeling, etc., is indicated by a marking, and an unevenness level is indicated by a rectangle. For example, the worker can indicate that cracks are present at the points A1 and A5 but they pose no problem, and the owner, etc., concerned about cracking and peeling, etc., can be relieved.

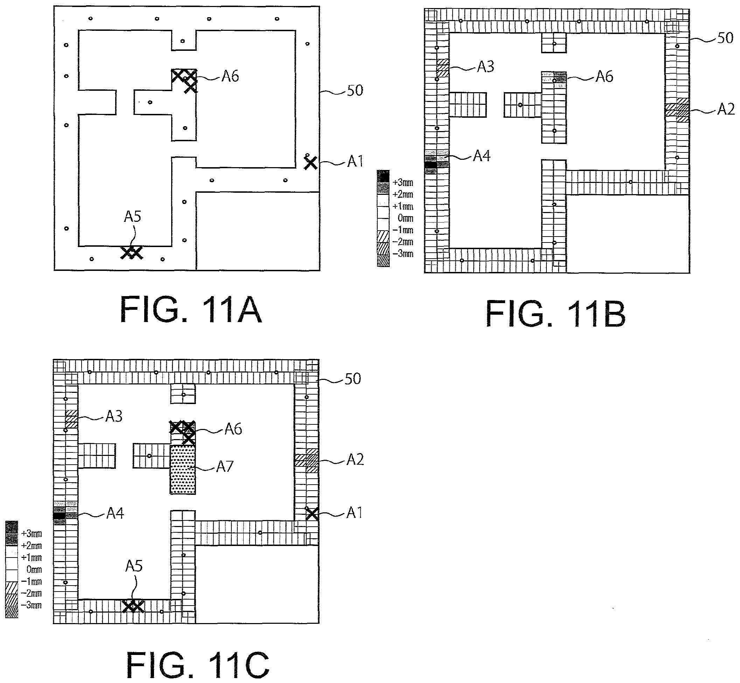

The description given above is on the assumption that an unevenness level inspection and a hammering test are simultaneously conducted. Without limitation to this, the inspecting device 1 may be configured to have two modes of an unevenness level inspection mode and a hammering test mode, and conduct only an unevenness level inspection or only a hammering test. In the case where the hammering test mode is executed, FIG. 11A illustrates display data 50 when the same site as in FIG. 10C is inspected in the hammering test mode, and FIG. 11B illustrates display data 50 when the unevenness level inspection mode is executed. In this way, by performing an independent inspection as necessary, necessary data can be displayed.

FIG. 11C illustrates a different example of display data 50. In FIG. 11C, an uninspected region A7 is displayed in a color tone different from that of unevenness level information. Accordingly, an uninspected region can be emphasized, so that omission of inspection can be prevented.

### (Second Embodiment)

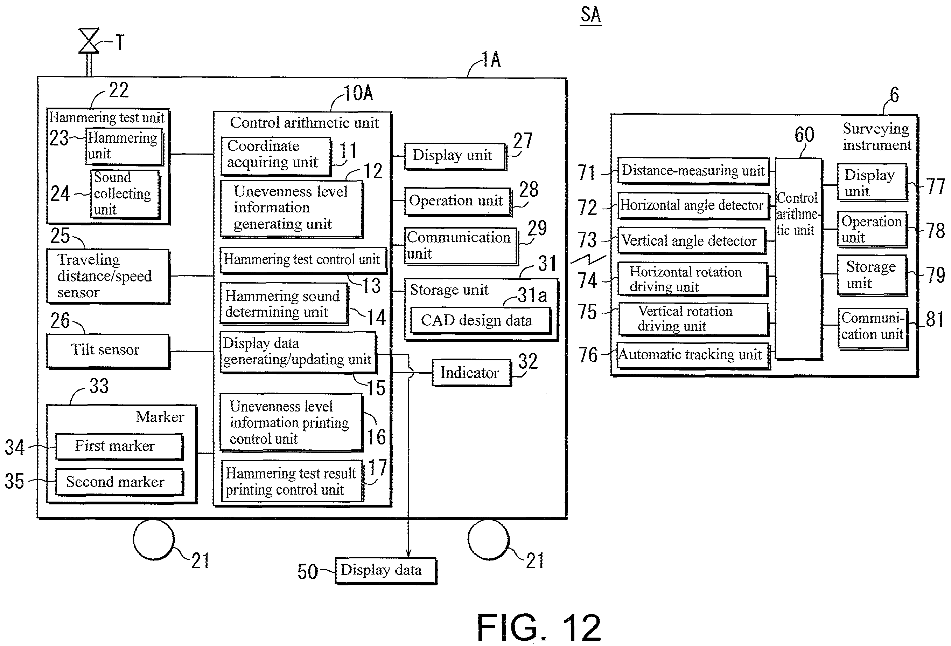

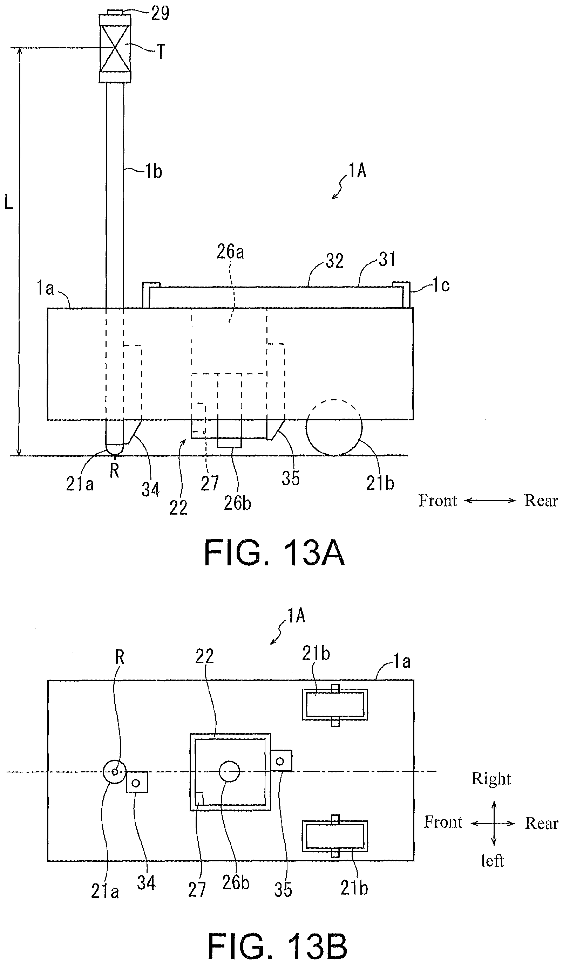

FIG. 12 is a configuration block diagram of a system SA according to a second embodiment. FIG. 13A is a side view of an inspecting device 1A constituting the system SA, and FIG. 13B is a bottom view of the same. The system SA has a configuration substantially similar to the configuration of the system S except for the following respects.

The inspecting device 1A further includes a marker 33. The marker 33 includes a first marker 34 and a second marker 35. The marker 33 is a jet-type ink discharging device that includes at least an ink tank, an actuation mechanism, and an ink discharge mechanism, and discharges ink in the form of a dot (small circle) toward a predetermined position. The first marker 34 is disposed at a rear side of the front wheel 21a and close to the front wheel 21a, and according to control of an unevenness level information printing control unit 16, marks unevenness level information at a position corresponding to a target measurement position. The second marker 35 is disposed at a rear side of the hammering test unit 22 and close to the hammering test unit 22, and according to control of a hammering sound determination result printing control unit 17, marks a hammering test result at a position corresponding to a hammering position. The first marker 34 is configured to be capable of discharging inks in a plurality of colors, and the second marker 35 is configured to be capable of discharging ink in a color different from the ink colors of the first marker 34.

The first marker 34 and the second marker 35 are disposed so that their marking regions deviate from each other in a left-right direction orthogonal to a front-rear direction that is a traveling direction, and a marking region by the first marker 34 and a marking region by the second marker 35 do not overlap each other on the to-be-inspected surface even when they are at the same position in the traveling direction.

A control arithmetic unit 10A further includes the unevenness level information printing control unit 16 and the hammering sound determination result printing control unit 17.

The unevenness level information printing control unit 16 prints unevenness level information (marking M₁) corresponding to a determined unevenness level on a to-be-inspected surface by controlling the first marker 34.

The hammering sound determination result printing control unit 17 prints hammering test results (marking M₂) on a to-be-inspected surface when the hammering sound determining unit 15 determines an abnormality.

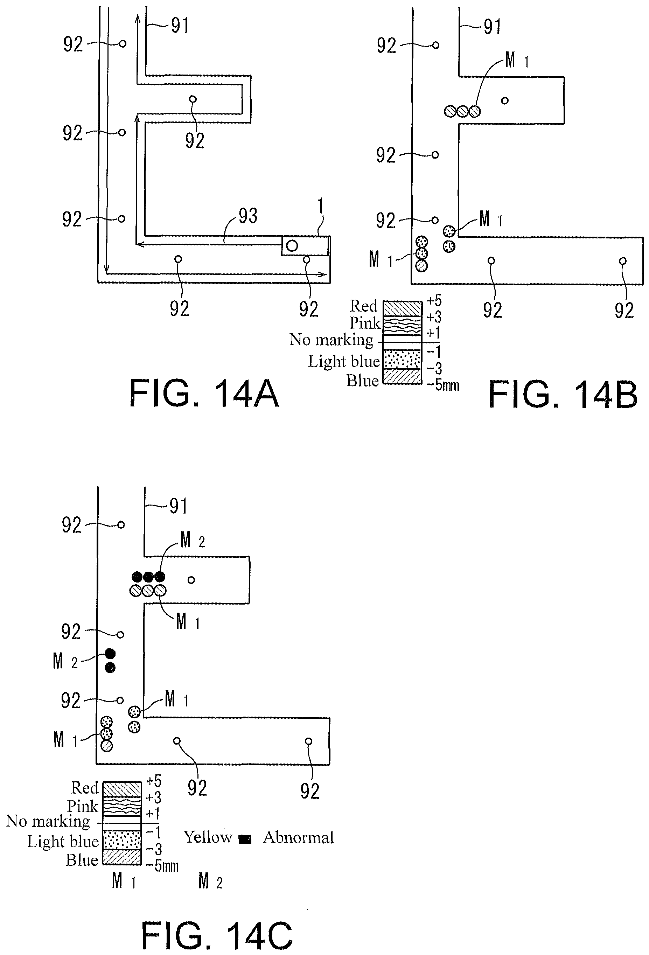

FIG. 14B illustrates an example of markings M₁ and M₂ printed on a to-be-inspected surface when a top end of the foundation rising 91 illustrated in FIG. 14A is inspected by causing the inspecting device to travel along an inspection route 93. A marking M₁ indicates an unevenness level inspection result, and a marking M₂ indicates a hammering test result. At a center of the foundation rising 91, a plurality of anchor bolts 92 project vertically.

As illustrated in FIG. 14B, as with the display data, a marking is displayed in a color that differs depending on a magnitude of a difference from the reference height. As in the first embodiment, in a case where a reference height is measured and set in advance, it is preferable that bi-polar color progression is used in a manner that a difference from the reference height, falling within a predetermined range (±1 mm, etc.) based on 0 mm as a reference, is displayed in white or provided with no mark, and the color becomes darker as an absolute value of the difference increases toward the more positive and negative sides . When a height of the starting point is set as the reference height, and the level of the reference height is unknown in the entirety, it is preferable to use a single hue color progression. In this case, the color becomes darker as a difference from the reference height increases (changes from a negative value toward a positive value). In this way, an unevenness level can be intuitively recognized. In the present example, a difference from the reference height is represented by a positive value when the height of the to-be-inspected surface is higher than the reference height, and represented by a negative value when the height of the to-be-inspected surface is lower than the reference height. In this way, in the present embodiment, in addition to generating display data, displaying the data on the display unit, and outputting the data to an external device, unevenness level information is indicated on a to-be-inspected surface at the site according to a magnitude of a difference between a current height and a reference height, so that the state of the site can be visually grasped at the site through one inspection, and it becomes possible to explain the state to a client and acquire digital data to be used for recording, etc.

FIG. 14C illustrates an example of a to-be-inspected surface on which markings of hammering test results are printed in addition to the markings indicating unevenness level information. Hammering test results are indicated by yellow, etc., that are marks different from the types of the colors of the unevenness level information. Alternatively, a marking in a fluorescent color may be marked. In this way, according to the present embodiment, in addition to the unevenness level, hammering test results of the upper surface state can be easily visually recognized at the site.

Preferred embodiments of the present invention have been described above, however, the embodiments described above are just examples of the present invention, and these can be combined based on the knowledge of a person skilled in the art, and such a combined embodiment is also included in the scope of the present invention.

### Reference Signs List

- 1:: Unevenness level inspecting device
- 6:: Surveying instrument
- 21:: Traveling unit
- 22:: Hammering test unit
- 23:: Hammering unit
- 23b:: Hammer
- 24:: Sound collecting unit
- 29:: Communication unit
- 50:: Display data
- 81:: Communication unit
- 95:: Indication of unevenness level information
- 500:: Display data
- L:: Distance
- T:: Target

## Claims

1. An unevenness level inspecting device comprising:
a target at a known distance from a to-be-inspected surface;
a traveling unit for traveling on the to-be-inspected surface;
a communication unit capable of making communication with a surveying instrument configured to measure three-dimensional position coordinates of the target at predetermined intervals; and
a control unit configured to calculate a height of the to-be-inspected surface corresponding to a measurement position of the target based on the three-dimensional position coordinates of the target, wherein
the control unit calculates a height of the to-be-inspected surface corresponding to a measurement position of the target measured each time the unevenness level inspecting device travels a predetermined distance based on the three-dimensional position coordinates of the target, and generates display data for displaying unevenness level information associating a difference between the height of the to-be-inspected surface and a reference height with inspecting device position coordinates in a manner that the unevenness level information is superimposed on a site design drawing.

2. The unevenness level inspecting device according to Claim 1, wherein the unevenness level information is displayed in a color that differs depending on a magnitude of a difference between the height of the to-be-inspected surface and the reference height.

3. The unevenness level inspecting device according to Claim 1 or 2, wherein each time a height of the to-be-inspected surface is calculated, the control unit generates the unevenness level information and updates the display data.

4. The unevenness level inspecting device according to any one of Claims 1 to 3, wherein the reference height is a representative value of heights of the to-be-inspected surface measured at a plurality of points on the to-be-inspected surface, the representative value is an average value, a median value, or a mode value, and the unevenness level information is indicated by using bi-polar color progression so as to be indicated in a color that becomes darker as an absolute value of the difference between the height of the to-be-inspected surface and the reference height increases.

5. The unevenness level inspecting device according to any one of Claims 1 to 4, further comprising:
a hammering test unit including a hammering unit configured to hammer the to-be-inspected surface with a hammer, and a sound collecting unit configured to detect a hammering sound issued by the hammer, wherein
the control unit determines whether there is an abnormality on an upper surface of the to-be-inspected surface at a hammering position based on a hammering sound collected by the hammering test unit, and when an abnormality is found, generates a hammering sound determination result associating information on the presence of the abnormality with hammering position coordinates, and
superimposes and displays an indication indicating the hammering sound determination result on a site design drawing.

6. The unevenness level inspecting device according to Claim 5, wherein the control unit updates the display data each time the hammering sound determination result is generated.

7. An unevenness level inspecting system comprising:
the unevenness level inspecting device according to any of Claims 1 to 6; and
a surveying instrument configured to emit measuring light to the target and receive reflected light to measure a distance and an angle to the target so as to calculate the three-dimensional position coordinates of the target, and to output to the unevenness level inspecting device.

8. An unevenness level inspecting method using an unevenness level inspecting device including a target at a known distance from a to-be-inspected surface, a traveling unit for traveling on the to-be-inspected surface, a communication unit capable of making communication with a surveying instrument configured to measure three-dimensional position coordinates of the target at predetermined intervals, and a control unit configured to calculate a height of the to-be-inspected surface corresponding to a measurement position of the target based on the three-dimensional position coordinates of the target, wherein
the control unit calculates a height of the to-be-inspected surface at a measurement position of the target measured each time the unevenness level inspecting device travels a predetermined distance based on the three-dimensional position coordinates of the target, and
generates display data for displaying unevenness level information associating a difference between the height of the to-be-inspected surface and a reference height with inspecting device position coordinates in a manner that the unevenness level information is superimposed on a site design drawing.

9. A program for causing a computer to perform the unevenness level inspecting method according to Claim 8.
